# EUROPEAN PATENT APPLICATION

(11) **EP 2 515 482 A1**
(43) Date of publication of application: **24.10.2012**
(21) Application number: 12164586.5
(22) Date of filing: 18.04.2012
(51) Int. Cl.: H04L 12/26

(54) **Methods and systems for detecting compatibility issues within an electrical grid control system**

(30) Priority: 19.04.2011 US 201113089762
(71) Applicant: GENERAL ELECTRIC COMPANY, Schenectady, NY 12345 (US)
(72) Inventor: McMullin, Dale Robert, Atlanta, GA Georgia 30339-8402 (US); Boot, John Christopher, Atlanta, GA Georgia 30339-8402 (US)
(74) Representative: Cleary, Fidelma

(57) **Abstract**

A packet inspection system (98) for use in a power grid control system (50) comprising a plurality of subsystems (60) is described. The packet inspection system includes a memory device (122) configured to store information associated with the plurality of subsystems. The packet inspection system also includes a deep packet inspection device (100) configured to extract at least one data packet sent to a central subsystem (30) of the plurality of subsystems. The packet inspection system also includes a processing device (108) coupled to the deep packet inspector and to the memory device. The processing device is configured to identify a compatibility issue within the power grid control system by analyzing the at least one data packet.

## Description

### BACKGROUND OF THE INVENTION

The embodiments described herein relate generally to an electric power generation and delivery system and, more particularly, to systems and methods for detecting compatibility issues between components within an electrical grid control system.

Power generated by an electric utility is typically delivered to a customer via an electric grid. The power generation and delivery system is monitored and controlled by a grid control system. The grid control system generally includes a large number of individual subsystems, each of which may also each include multiple components. Typically, information is received from many of the subsystems/components, and used to control operation of the electrical grid. For example, some power utilities utilize what is referred to herein as a "smart grid" or Advanced Metering Infrastructure (AMI) power network. Known smart grids each include a plurality of subsystems that communicate with an operations subsystem, that is typically located at the utility and remotely from the subsystems. However, due at least in part to the large scale of a smart grid, and the quantity of individual component/subsystems coupled within a smart grid, maintaining compatibility between the components may be difficult. Moreover, a component that has been upgraded or replaced within the smart grid may not be reported and/or may not be timely reported to the central controller and during operation may cause unforeseen compatibility issues with other components within the smart grid.

### BRIEF DESCRIPTION OF THE INVENTION

In a first aspect, the invention resides in a method for detecting a compatibility issue within an electrical grid control system that includes a plurality of subsystems. The method includes storing information associated with the plurality of subsystems and extracting at least one data packet from information sent from a first subsystem of the plurality of subsystems to a second subsystem of the plurality of subsystems. The method also includes comparing the at least one data packet to the stored subsystem information.

In another aspect, the present invention resides in a packet inspection system for use in a power grid control system comprising a plurality of subsystems. The packet inspection system includes a memory device configured to store information associated with the plurality of subsystems. The packet inspection system also includes a first deep packet inspection device configured to extract at least one data packet sent to a central subsystem of the plurality of subsystems. The packet inspection system also includes a processing device coupled to the first deep packet inspector and to the memory device. The processing device is configured to identify a compatibility issue within the power grid control system by analyzing the at least one data packet.

### BRIEF DESCRIPTION OF THE DRAWINGS

Embodiments of the present invention will now be described, by way of example only, with reference to the accompanying drawings in which:
Figure 1 is a block diagram of an exemplary electric power generation and delivery system.
Figure 2 is a block diagram of an exemplary embodiment of an electrical grid control system.
Figure 3 is a block diagram of an exemplary embodiment of a processing device that may be included within the electrical grid control system shown in Figure 2.
Figure 4 is a flow chart of an exemplary method for detecting compatibility issues within the electrical grid control system shown in Figure 2.

### DETAILED DESCRIPTION OF THE INVENTION

The methods and systems described herein facilitate detecting compatibility issues between components included within an electrical grid control system. The electrical grid control system includes, for example, home or commercial subsystems, distributed generation subsystems, distribution automation subsystems, substation subsystems, and a distribution control center subsystem. In the methods and systems described herein, a deep packet inspection device extracts data packets sent between subsystems included within the electrical grid control system. The deep packet inspection device also assembles a message from the extracted data packets and provides the assembled message to a processing device. The processing device identifies a compatibility issue within the electrical grid control system by analyzing individual data packets. The processing device also identifies a compatibility issue within the electrical grid control system by analyzing the assembled message. Identifying compatibility issues within the electrical grid control system facilitates maintaining compatibility between components within the system even though the components are provided and/or maintained by multiple entities, and generally under the control of those separate entities.

Technical effects of the methods and systems described herein include at least one of: (a) storing information associated with a plurality of subsystems; (b) extracting at least one data packet from information sent from a first subsystem of the plurality of subsystems and a second subsystem of the plurality of subsystems; and (c) comparing the at least one data packet to the stored subsystem information.

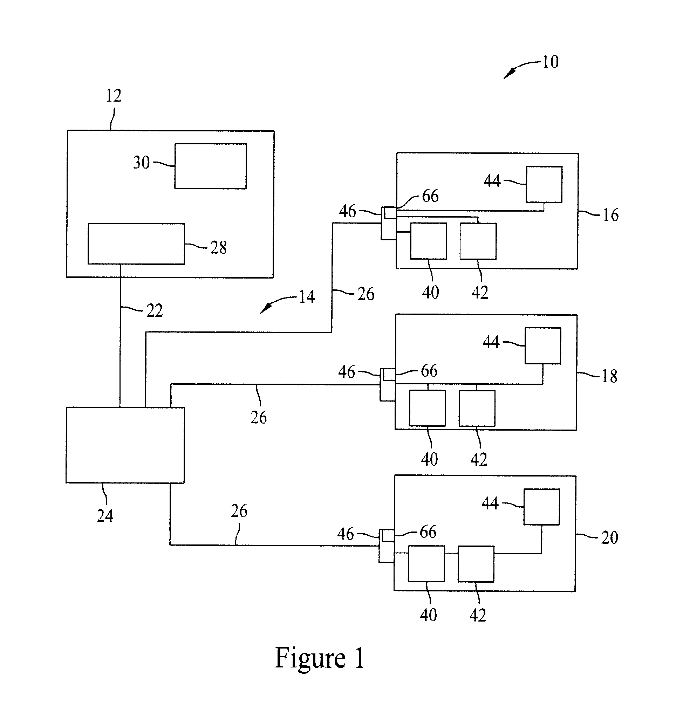

Figure 1 is a block diagram of an exemplary electric power generation and delivery system 10. In the exemplary embodiment, electric power generation and delivery system 10 includes an electric utility 12, an electrical grid 14, and a plurality of customer or energy user locations, for example, a first customer location 16, a second customer location 18, and a third customer location 20. In the exemplary embodiment, electricity is delivered from electric utility 12 to customer locations 16, 18, and 20 via electrical grid 14. In the exemplary embodiment, electrical grid 14 includes at least one transmission line 22, an electrical substation 24, and a plurality of distribution lines 26. Moreover, in the exemplary embodiment, electric utility 12 includes an electric power generation system 28 that supplies electrical power to electrical grid 14. Electric power generation system 28 may include a generator driven by, for example, a gas turbine engine, a hydroelectric turbine, and/or a wind turbine. Alternatively, electric power generation system 28 may utilize solar panels and/or any other electricity generating device that allows system 10 to function as described herein.

In the exemplary embodiment, electric utility 12 also includes a distribution control center substation 30 that controls energy production and delivery. Distribution control center substation 30 is illustrated as included within electric utility 12, however, distribution control center substation 30 may be external to electric utility 12 (e.g., remotely located) and in communication with electric utility 12. Furthermore, although described as including a computer system, distribution control center substation 30 may include any suitable processing device that enables electric power generation and delivery system 10 to function as described herein. The term processing device, as used herein, refers to central processing units, microprocessors, microcontrollers, reduced instruction set circuits (RISC), application specific integrated circuits (ASIC), logic circuits, and any other circuit or processor capable of executing the functions described herein.

In the exemplary embodiment, customer locations 16, 18, and 20 each include an end user meter 46. In the exemplary embodiment, end user meters 46 are part of an advanced metering infrastructure (AMI). AMI is an example of a bi-directional communication system that enables electric utility 12 to measure and collect information relevant to energy usage from customer locations 16, 18, and 20, as well as to provide data and control signals to end user meter 46. Information may also be collected from other subsystems of electric power generation and delivery system 10.

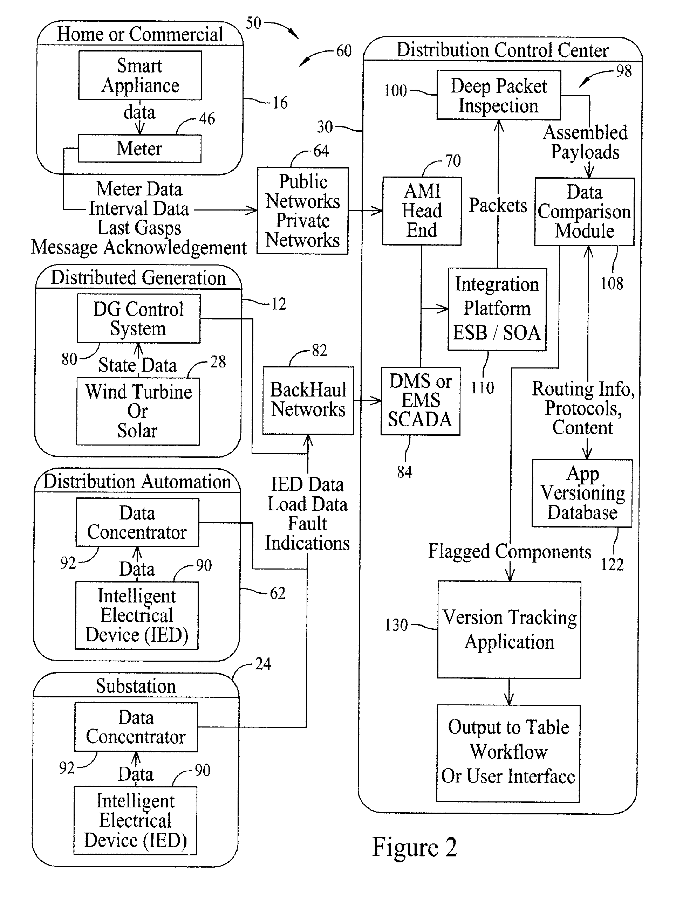

Figure 2 is a block diagram of an exemplary embodiment of an electrical grid control system 50. In the exemplary embodiment, electrical grid control system 50 is a control system used to monitor and control operation of electric power generation and delivery system 10 (shown in Figure 1). In the exemplary embodiment, system 50 includes a plurality of subsystems 60 including, but not limited to, a home or commercial subsystem, for example, customer location 16 (shown in Figure 1), a distributed generation subsystem, for example, electric utility 12 (shown in Figure 1), a distribution automation subsystem 62, a substation subsystem, for example, substation 24 (shown in Figure 1), and distribution control center subsystem 30.

In the exemplary embodiment, customer location 16 is coupled to distribution control center substation 30 over a network 64. Network 64 may include a public network, a private network, or a combination of public and private networks. More specifically, meter 46 may be coupled to an AMI head-end system 70, or a plurality of AMI head-end systems, included within distribution control center substation 30 by network 64. AMI head-end system 70 manages a communication network implementing desired meter reading schedules and enacts other meter and communication-related commands. Network 64 includes wired and/or wireless components. Wireless components may be configured to use wireless standards including, but not limited to, 2G, 3G, and 4G cellular standards such as LTE, EDGE, and GPRS, IEEE 802.16 Wi-Max, IEEE 802.15 ZigBee®, Bluetooth, IEEE 802.11 standards including 802.11a, 802.11b, 802.11d, 802.11e, 802.11g, 802.11h, 802.11i, 802.11j, and 802.11n, Wi-Fi®, and proprietary standards such as Z-Wave®. Wi-Fi® is a certification mark developed by the Wi-Fi Alliance, ZigBee® is a registered trademark of ZigBee Alliance, Inc. of San Ramon, CA, and Z-Wave® is an identity mark of the Z-Wave Alliance of Milpitas, CA. Meters 46 collect energy usage information and provide it to distribution control center substation 30.

In the exemplary embodiment, distributed generation subsystem 12 includes electric power generation system 28 and a control system 80. Control system 80 is coupled to distribution control center substation 30 by, for example, a backhaul network 82 or a plurality of backhaul networks. More specifically, backhaul network 82 couples control system 80 to a management system 84 within distribution control center substation 30. Management system 84 may include, but is not limited to, a distribution management system (DMS), an energy management system (EMS), and/or a supervisory control and data acquisition (SCADA) system.

In the exemplary embodiment, distribution automation subsystem 62 and substation subsystem 24 are also coupled to distribution control center substation 30 over backhaul network 82. Distribution automation subsystem 62 includes at least one intelligent electrical device (IED) 90 and a data concentrator 92. In the exemplary embodiment, substation subsystem 24 also includes at least one IED 90 and data concentrator 92. IED 90 may include, but is not limited to, a protective relaying device, a load tap changer controller, a circuit breaker controller, and/or a capacitor bank switch. Distribution automation subsystem 62 and substation subsystem 24 provide distribution control center substation 30 with information corresponding to operating states of IED 90, information associated with a load on electrical grid 14, and/or information identifying fault indications.

In the exemplary embodiment, distribution control center substation 30 also includes a deep packet inspection system 98. In the exemplary embodiment, deep packet inspection system 98 includes at least one deep packet inspection device 100 and at least one processing device 108. Deep packet inspection device 100 extracts at least one data packet, which may also be referred to as a datagram, received at distribution control center subsystem 30 and assembles a message from the at least one data packet. For example, deep packet inspection device 100 may be coupled to an integration platform 110, which may include a service oriented architecture (SOA) and/or an enterprise service bus (ESB). Deep packet inspection device 100 may extract data packets received by AMI head-end system 70, received by management system 84, received by distribution control center substation 30 from an Internet connection, and/or sent or received by any other subsystem within electrical grid control system 50.

Processing device 108 may also be referred to herein as a data comparison module 108. Data comparison module 108 is coupled to a memory device 122. Memory device 122 stores information associated with each of the plurality of subsystems 60. The stored information may include, but is not limited to, a unique identifier for each respective subsystem (e.g., a unique identifier for a device within the subsystem that generates a message) and/or at least one property associated with a message generated by each respective subsystem. For example, memory device 122 may store an internet protocol (IP) address, a media access control (MAC) address, and/or any other unique identifier of a device within a subsystem that generates a message. More specifically, an IP address identifying distributed generation control system 80 may be stored in memory device 122. Furthermore, the at least one property associated with a message generated by each respective subsystem may include, but is not limited to, a field length, a number of fields within the message, a type of field separator included within the message, and/or any other attribute of a message (e.g., expected structure of a message) that facilitates identifying a type of device and/or a type or version of software used to generate the message. Although illustrated as separate devices, tasks performed by deep packet inspection device 100 and data comparison module 108 may be performed by a single device and/or system.

Module 108 receives the data packet or assembled message from deep packet inspection device 100 and identifies a compatibility issue within electrical grid control system 50 by analyzing the data packet and/or assembled message. Each data packet, and each assembled message, has a structured format that may include a header, a payload, and a footer. In the exemplary embodiment, module 108 determines which of the plurality of subsystems 60 generated the data packet or assembled message from information included within the header. The subsystem that generated the data packet or assembled message is referred to herein as a source subsystem. For example, module 108 may determine which of the plurality of subsystems 60 is the source subsystem by comparing the IP address included within the header of the data packet or assembled message to information stored in memory device 122. Module 108 generates a compatibility alarm signal if the IP address included within the header does not correspond to any of the IP addresses stored in memory device 122. If deep packet inspection device 100 has extracted a message from a device and/or subsystem not registered with distribution control center substation 30, a new device and/or subsystem has been added to electrical grid control system 50 that may cause compatibility issues within electrical grid control system 50. In other words, module 108 is configured to generate the compatibility alarm when no information associated with the source subsystem is included within the subsystem information stored in memory device 122. The compatibility alarm signal identifies that a compatibility issue may be present within electrical grid control system 50 and provides the alarm and IP address to a user who uses the information to analyze and/or repair electrical grid control system 50.

If the IP address included within the header corresponds to an IP address stored in memory device 122, module 108 further compares the assembled message to the stored subsystem information associated with the subsystem determined to be the source of the message. The message header also includes information identifying a protocol used to generate the message and the information stored in memory device 122 includes a type of message protocol the source subsystem uses to generate messages. Module 108 generates a compatibility alarm if the message protocol of the assembled message does not correspond to the stored message protocol associated with the identified source subsystem. By identifying that the source subsystem generated a message using a protocol that is different than the type of protocol expected to be used by the source subsystem, deep packet inspection system 98 facilitates identifying that a change has been made within electrical grid control system 50. Most likely, such a change may be a change to the source subsystem, for example, a software update and/or a hardware update. A change to the subsystem may not cause compatibility issues within electrical grid control system 50, however, tracking updates and changes to components within system 50 facilitates troubleshooting issues if they do arise.

In the exemplary embodiment, module 108 also compares at least one property of the payload of the message to stored information associated with the source subsystem. For example, memory device 122 may store properties of a message generated by the source subsystem. Module 108 determines if the properties of the payload of the assembled message correspond to expected properties of a message generated by the source subsystem. More specifically, module 108 generates a compatibility alarm signal if the at least one property of the payload of the assembled message does not correspond to the stored at least one property associated with the source subsystem. In a specific example, information may be stored in memory device 122 that indicates that a specific distributed generation subsystem 12 generates messages having twelve fields. If module 108 receives a message determined to have been transmitted by distributed generation subsystem 12 that includes a payload having eighteen fields, module 108 identifies a compatibility issue within electrical grid control system 50 and generates an alarm signal. In such an instance, the message transmitted by distributed generation subsystem 12 did not match a message expected to be sent by distributed generation subsystem 12, and therefore, module 108 identifies that a change has been made to distributed generation subsystem 12. Properties of messages that may be compared to stored properties include, but are not limited to only including, a length of fields included within a message generated by the source subsystem, a number of fields included within a message generated by the source subsystem, and a type of field separator included within a message generated by the source subsystem.

In the exemplary embodiment, deep packet inspection system 98 may also include a version tracking module 130. After a compatibility alarm signal is generated by data comparison module 108, version tracking module 130 is accessed to provide a user with additional information identifying where a compatibility issue exists within electrical grid control system 50. For example, if a compatibility issue is identified by an unexpected protocol used to generate a message sent by distribution automation subsystem 62, the user may determine that the software used by subsystem 62 has been upgraded. However, the user may also determine that subsystem 62 has not been modified and/or updated. Version tracking module 130 provides the user with additional information that may be used to identify the subsystem within electrical grid control system 50 that caused the compatibility alarm signal to be generated.

In the exemplary embodiment, version tracking module 130 may store mapping information of connections between components within electrical grid control system 50. Packets may be generated by a first component within system 50, and transmitted through a second component within system 50 before reaching a third, destination component within system 50. The second component may add information to the packet and/or modify the packet. These additions and/or modifications may cause compatibility issues within system 50. For example, IED 90 of substation subsystem 24 may generate a message, which is passed through a number of other components, for example, data concentrator 92, before reaching distribution control center substation 30. Version tracking module 130 identifies those other components and provides information about those components to the user. The user may then inspect those components to identify the source of the compatibility alarm signal. Version tracking module 130 may also store workorder management information that may be accessed to identify components within system 50 that have received attention by technicians and when the work was performed. Furthermore, version tracking module 130 may store information identifying protocols known to be compatible and protocols known to be incompatible. Such information can be combined with the stored mapping information to determine if a change to a first component has caused a compatibility issue with a second component in communication with the first component.

Moreover, module 108 may provide a test signal to a subsystem within electrical grid control system 50 configured to illicit a response from the subsystem. If no response is received by module 108, version tracking module 130 may be accessed to determine whether changes to the subsystem caused a compatibility issue that prevents the subsystem from responding to the test signal.

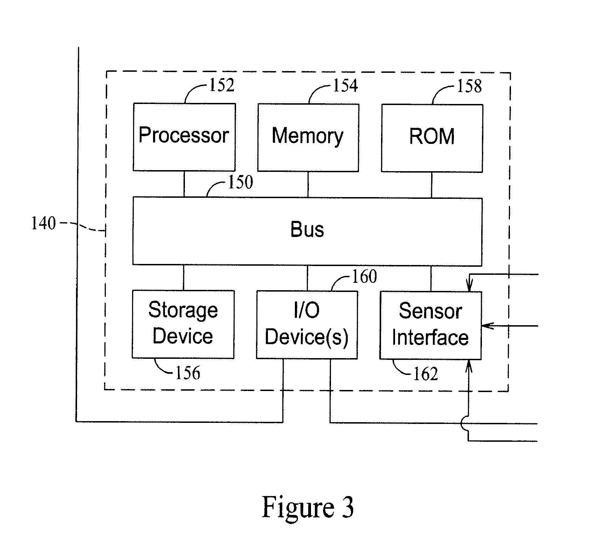

Figure 3 is a block diagram of an exemplary embodiment of a processing device 140 that may be included within distribution control center substation 30 (shown in Figure 2), and configured to perform operations associated with data comparison module 108 and/or version tracking module 130 (shown in Figure 2). Processing device 140 may also be referred to as a system controller and/or a SCADA system. In some embodiments, processing device 140 includes a bus 150 or other communications device to communicate information. One or more processor(s) 152 are coupled to bus 150 to process information, including messages received from deep packet inspection device 100 (shown in Figure 2). Processor(s) 152 may include at least one computer. As used herein, the term computer is not limited to integrated circuits referred to in the art as a computer, but broadly refers to a processor, a microcontroller, a microcomputer, a programmable logic controller (PLC), an application specific integrated circuit, and other programmable circuits, and these terms are used interchangeably herein.

Processing device 140 may also include one or more random access memories (RAM) 154 and/or other storage device(s) 156. RAM(s) 154 and storage device(s) 156 are coupled to bus 150 to store and transfer information and instructions to be executed by processor(s) 152. RAM(s) 154 (and/or storage device(s) 156, if included) can also be used to store temporary variables or other intermediate information during execution of instructions by processor(s) 152. Processing device 140 may also include one or more read only memories (ROM) 158 and/or other static storage devices coupled to bus 150 to store and provide static (i.e., non-changing) information and instructions to processor(s) 152. Instructions that are executed include, without limitation, resident conversion and/or comparator algorithms. The execution of sequences of instructions is not limited to any specific combination of hardware circuitry and software instructions.

Processing device 140 may also include, or may be coupled to, input/output device(s) 160. Input/output device(s) 160 may include any device known in the art to provide input data to processing device 140 and/or to provide outputs, such as, but not limited to, IEDs 90 (shown in Figure 2). Instructions may be provided to RAM 154 from storage device 156 including, for example, a magnetic disk, a read-only memory (ROM) integrated circuit, CD-ROM, and/or DVD, via a remote connection that is either wired or wireless providing access to one or more electronically-accessible media. In some embodiments, hard-wired circuitry can be used in place of or in combination with software instructions. Thus, execution of sequences of instructions is not limited to any specific combination of hardware circuitry and software instructions, whether described and/or shown herein. Also, in the exemplary embodiment, input/output device(s) 160 may include, without limitation, computer peripherals associated with an operator interface (e.g., a human machine interface (HMI)) such as a mouse and a keyboard (neither shown in Figure 3). Furthermore, in the exemplary embodiment, additional output channels may include, for example, an operator interface monitor and/or alarm device (neither shown in Figure 3). Processing device 140 may also include a sensor interface 162 that allows processing device 140 to communicate with sensors. Sensor interface 162 may include one or more analog-to-digital converter that converts analog signals into digital signals that can be used by processor(s) 152.

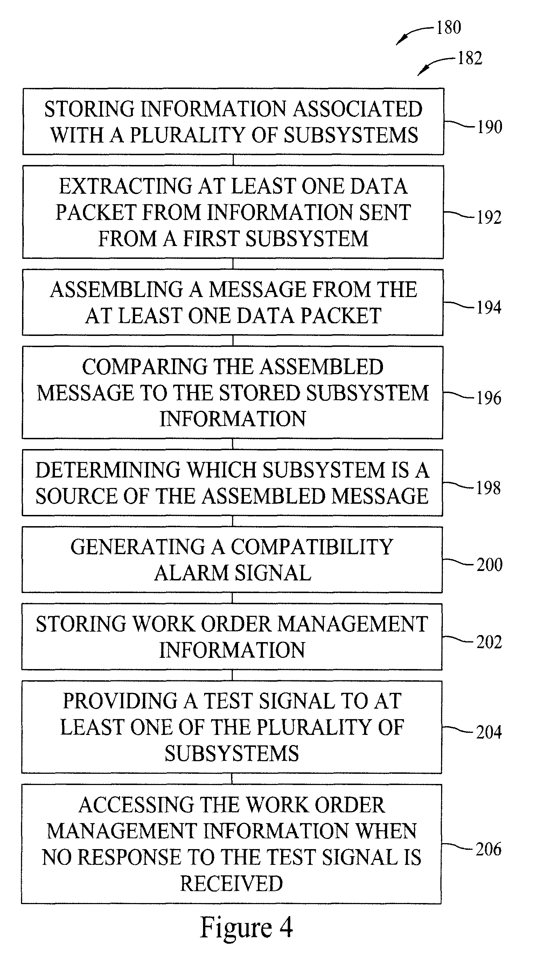

Figure 4 is a flow chart 180 of an exemplary method 182 for detecting compatibility issues within an electrical grid control system, for example, electrical grid control system 50 (shown in Figure 2). In the exemplary embodiment, method 182 includes storing 190 information associated with the plurality of subsystems. For example, a memory device, for example, memory device 122 (shown in Figure 2), may store at least one of an Internet Protocol (IP) address of each subsystem of the plurality of subsystems 60 (shown in Figure 2), a message protocol associated with each respective subsystem of the plurality of subsystems 60, and at least one property of a payload generated by each respective subsystem of the plurality of subsystems 60.

Method 182 may also include extracting 192 at least one data packet from information sent from a first subsystem of the plurality of subsystems, for example, distributed generation subsystem 12 (shown in Figure 2). A deep packet inspection device, for example, deep packet inspection device 100 (shown in Figure 2) may extract at least one data packet sent between an advanced metering infrastructure (AMI) head-end system and the central subsystem, between a SCADA backhaul system and the central subsystem, between an Internet connection and the central subsystem, and/or between any other subsystems within electrical grid control system 50.

Method 182 may also include assembling 194 a message from the at least one data packet, wherein the message includes a header, a payload, and a footer. The assembled message is compared 196 to the stored subsystem information.

Method 182 also includes determining 198 which of plurality of subsystems 60 is a source subsystem of the assembled message. For example, the source subsystem may be identified from an IP address included within the header of the assembled message. Furthermore, a compatibility alarm signal is generated 200 when no information associated with the source subsystem is included within the stored subsystem information. For example, the compatibility alarm signal is generated 200 when the IP address associated with the source subsystem is not included within the stored subsystem information. The compatibility alarm signal identifies that a compatibility issue may be present within electrical grid control system 50 and provides the alarm and IP address to a user for further analysis. A compatibility alarm may also be generated 200 if the at least one property of the payload of the assembled message does not correspond to the stored at least one property associated with the source subsystem. Properties of messages that may be compared to stored properties include, but are not limited to, a length of fields included within a message generated by the source subsystem, a number of fields included within a message generated by the source subsystem, and a type of field separator included within a message generated by the source subsystem.

Method 182 may also include storing 202 work order management information, providing 204 a test signal to at least one of the plurality of subsystems to illicit a response from the subsystem, and accessing 206 the work order management information when no response to the test signal is received to determine whether changes to the subsystem caused the compatibility issue.

The methods and systems described herein use information included within a message, and/or properties of the message, to identify potential compatibility issues within an electrical grid control system. Stored information corresponding to an expected protocol and/or expected characteristics of a message generated by a source subsystem are compared to the actual protocol and actual characteristics of a message extracted and assembled by a deep packet inspection device. If a compatibility issue is detected, a compatibility alarm signal is generated that identifies the compatibility issue and a component within the electrical grid control system that may have caused the compatibility issue. Although described herein with respect to an electrical grid control system, the methods and systems described herein may also be applied to other types of networked control systems to determine compatibility issues between components included within the networked control system.

The above-described embodiments facilitate efficient and cost-effective operation of an electrical grid control system. The electrical grid control system described herein automatically identifies components/subsystems within the electrical grid control system that may be, or may soon cause, compatibility issues between other components/subsystems within the electrical grid control system. Furthermore, an alarm is raised when a compatibility issue is identified, providing a user with an indication that a compatibility issue may be present, and the component/subsystem that may be causing the compatibility issue.

Exemplary embodiments of an electrical grid control system are described above in detail. The methods and systems are not limited to the specific embodiments described herein, but rather, components of the systems and/or steps of the methods may be utilized independently and separately from other components and/or steps described herein.

Embodiments described herein may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the disclosure described herein may be implemented with any number and organization of such components or modules. For example, aspects of the disclosure are not limited to the specific computer-executable instructions or the specific components or modules illustrated in the figures and described herein. Other embodiments may include different computer-executable instructions or components having more or less functionality than illustrated and described herein. Aspects of the disclosure may also be practiced in distributed computing environments where tasks are performed by remote processing devices that are linked through a communications network. In a distributed computing environment, program modules may be located in both local and remote computer storage media including memory storage devices. Aspects of the disclosure transform a general-purpose computer into a special-purpose computing device when configured to execute the instructions described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (182) for detecting a compatibility issue within an electrical grid control system (50) that includes a plurality of subsystems (60), the method comprising:
storing (150) information associated with the plurality of subsystems (60);
extracting (192) at least one data packet from information sent from a first subsystem of the plurality of subsystems to a second subsystem (30) of the plurality of subsystems (60); and
comparing the at least one data packet to the stored subsystem information.

2. A method in accordance with Claim 1, further comprising:
assembling (194) a message that includes the at least one data packet, the message including a header and a payload; and
comparing (196) the assembled message to the stored subsystem information.

3. A method in accordance with Claim 1 or 2, wherein storing (190) information associated with the plurality of subsystems (60) comprises storing at least one of a unique identifier associated with each respective subsystem of the plurality of subsystems (60), a message protocol associated with each respective subsystem of the plurality of subsystems (60), and at least one property of a payload generated by each respective subsystem of the plurality of subsystems (60).

4. A method in accordance with Claim 1, 2 or 3 further comprising determining (198) which of the plurality of subsystems (60) is a source of the assembled message based on a unique identifier included within the header of the assembled message.

5. A method in accordance with any of Claims 1 to 4, further comprising at least one of:
generating a compatibility alarm signal (200) when the unique identifier of the source subsystem is not included within the stored subsystem information; and
generating a compatibility alarm signal if the at least one property of the payload of the assembled message does not correspond to the stored at least one property associated with the source subsystem.

6. A method in accordance with any of Claims 1 to 5, further comprising:
storing (202) work order management information;
providing (204) a test signal to at least one of the plurality of subsystems to illicit a response from the subsystem; and
accessing (206) the work order management information when no response to the test signal is received to determine whether changes to the subsystem caused the compatibility issue.

7. A method in accordance with any of Claims 1 to 6, wherein extracting (192) at least one data packet from information sent from a first subsystem comprises at least one of:
extracting at least one data packet from data received by an advanced metering infrastructure (AMI) head-end system;
extracting at least one data packet from data received by a SCADA backhaul system; and
extracting at least one data packet from data sent to the central subsystem (30) via an Internet connection.

8. A packet inspection system (98) for use in a power grid control system (50) comprising a plurality of subsystems (60), the packet inspection system comprising:
a memory device (122) configured to store information associated with the plurality of subsystems;
a deep packet inspection device (100) configured to extract at least one data packet sent to a central subsystem (30) of the plurality of subsystems; and
a processing device (108) coupled to the deep packet inspector and to the memory device, said processing device configured to identify a compatibility issue within the power grid control system by analyzing the at least one data packet.

9. A packet inspection system (98) in accordance with Claim 8, wherein the processing device (108) is further configured to:
receive the at least one data packet from the deep packet inspection device (100), the at least one data packet comprising a header and a payload;
determine which of the plurality of subsystems (60) is a source of the at least one data packet based on information included within the header of the at least one data packet;
compare the at least one data packet to the stored subsystem information associated with the subsystem determined to be the source subsystem; and
generate a compatibility alarm signal when a compatibility issue is identified.

10. A packet inspection system (98) in accordance with Claim 9, wherein the processing device (108) is further configured to generate the compatibility alarm signal when no information associated with the source subsystem is included within the subsystem information stored in the memory device (122).

11. A packet inspection system (98) in accordance with any of Claims 8 to 10, wherein the subsystem information stored in the memory device (122) corresponds to at least one of:
a first protocol used by a first component (90) within a first subsystem (24) of the plurality of subsystems (60), wherein the first protocol is used to communicate with a second component (92) within the third subsystem;
a second protocol used by the second component to communicate with the central subsystem (30); and
a plurality of protocols compatible with at least one of the first component and the second component.

12. A packet inspection system (98) in accordance with any of Claims 8 to 11, wherein the deep packet inspection device (100) is further configured to assemble a message from the at least one data packet.

13. A packet inspection system (98) in accordance with Claim 12, wherein the processing device (108) is further configured to:
receive the assembled message from the deep packet inspection device (100), the assembled message having a structured format;
determine which of the plurality of subsystems (60) is a source of the assembled message;
compare the assembled message to the stored subsystem information associated with the subsystem determined to be the source subsystem; and
generate a compatibility alarm signal when a compatibility issue is identified.

14. A packet inspection system (98) in accordance with Claim 12 or 13, wherein the information associated with the plurality of subsystems (60) comprises a message protocol associated with each respective subsystem of the plurality of subsystems, the processing device (108) further configured to generate the compatibility alarm signal if a message protocol of the assembled message does not correspond to the stored message protocol associated with the source subsystem.

15. A packet inspection system (98) in accordance with Claim 12 or 13, wherein the information associated with the plurality of subsystems (60) comprises at least one property of a payload generated by each respective subsystem of the plurality of subsystems, the processing device (108) further configured to generate the compatibility alarm signal if the at least one property of the payload of the assembled message does not correspond to the stored at least one property associated with the source subsystem.

16. A packet inspection system (98) in accordance with Claim 15, wherein the at least one property comprises at least one of an expected length of fields included within a message generated by the source subsystem, an expected number of fields included within a message generated by the source subsystem, and an expected type of field separator included within a message generated by the source subsystem.

17. A packet inspection system (98) in accordance with any of Claims 8 to 16, wherein the deep packet inspection device (100) extracts at least one data packet received by an advanced metering infrastructure (AMI) head-end system (70).
